(19) Europäisches Patentamt
European Patent Office
Office européen des brevets

(11) EP 4 582 466 A1

(12) **EUROPEAN PATENT APPLICATION**

(43) Date of publication:
**09.07.2025 Bulletin 2025/28**

(21) Application number: **24305016.8**

(22) Date of filing: **05.01.2024**

(51) International Patent Classification (IPC):
***C08G 69/26** (2006.01)* ***C08G 69/28** (2006.01)*

(52) Cooperative Patent Classification (CPC):
**C08G 69/265; C08G 69/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ARKEMA FRANCE**
**92800 Puteaux (FR)**

(72) Inventors:
- **YE, Wen**
**Changshu, 215522 (CN)**
- **WANG, Miao**
**117528 Singapore (SG)**
- **WERTH, Michael**
**27470 Serquigny (FR)**
- **BRIFFAUD, Thierry**
**27300 Bernay (FR)**

(74) Representative: **Arkema Patent**
**Arkema France**
**DRD-DPI**
**51, Esplanade du Général de Gaulle**
**CS 10478**
**92907 Paris La Défense Cedex (FR)**

# (54) PROCESS FOR THE MANUFACTURE OF SEMI-AROMATIC POLYAMIDES

(57) The invention concerns mainly a process for the manufacture of a furan-based polyamide comprising the steps of:
(a) mixing a diamine component A comprising at least one diamine with a diacid component B comprising at least one diester of 2,5-furandicarboxylic acid to form a reaction mixture;
(b) heating the reaction mixture obtained in step (a) to a temperature sufficient to form a diamine end-capped oligomer by melt polycondensation; and
(c) polymerizing the diamine end-capped oligomer obtained in step (b) with at least one dicarboxylic acid and optionally further monomers to form a furan-based polyamide, characterized in that
the molar ratio between the diamine component A and the diacid component B in the reaction mixture prepared in step (a) is 1,25 or more.

EP 4 582 466 A1

## Description

### [Technical Field]

The present application concerns a process for the manufacture of semi-aromatic polyamides. It also concerns semi-aromatic polyamides thus obtained.

### [State of the Art]

In view of increasing concerns about the availability and use of fossil resources, and in response to a strong market drive, a strong interest has been devoted to the development of bio-based materials from renewable resources, notably from biomass.

In that framework, 2,5-furandicarboxylic acid (FDCA or dehydromucic acid) has been assessed by the U.S. Department of Energy to be among the most viable bio-based building blocks for replacing phtalic acids in the production of semi-aromatic polymers.

FDCA based polyamides have drawn particular interest. However, the low thermal stability of FDCA renders its use in melt polycondensation processes difficult.

The international patent application WO 2014205358A1 discloses semi-crystalline copolymers based on FDCA including alkylene adipamide and/or alkylene terephtalamide. Such copolymers are produced by dissolving the respective monomer salts in water and heating the mixture under pressure to form a prepolymer and submitting the prepolymer subsequently to solid state polymerization (SSP).

But processes conducted in solvents such as water have the disadvantage of leading to FDCA degradation by decarboxylation, which reduces the attainable molecular weight.

The patent application CN 111471297A discloses a process for preparing a biobased transparent polyamide by reacting FDCA, a mixture of pentane diamine and Priamine 1075, a diamine obtained from vegetable oil, and benzoic acid in butanol, and submitting the powder obtained to reactive extrusion in presence of a metal salt and epoxidized cardanol. This process however uses substantial amounts of solvent and further relies on microwave heating and is thus not suitable for industrialization. Further, FDCA has a high melting point and is unstable as it tends to decarboxylation, which reduces the chance to attain sufficiently high molecular weight.

The patent application WO 2015/059047A1 discloses a process for making high molecular weight polyamides from FDCA and other aromatic dicarboxylic acid(s) where the FDCA is replaced by an ester derivative, notably its dimethylester (DMFDCA). The diamine, comprising an aliphatic C6 and/or C7 diamine, can be used in excess of about 5 to 43 mol.%. According to the examples, the reaction is conducted in a solvent and in two steps: the first step at around 50°C yields a prepolymer, which in a second step is then dissolved in dimethylacetamide along with LiCl and diisopropylethylamine (DIPEA) and reacted with a solution of an aromatic acid chloride at 0°C to form the copolyamide. As acknowledged, this process produces a high extent of N-methylation during polymerization. Further, this process has a rather low yield, requires a long reaction time and large quantities of solvent and catalyst, and is thus not very efficient. Finally, the polymer obtained has a large molecular weight distribution, which limits its applications.

The patent application US 2018/0371167 A1 proposes a process for making furan-based polyamides by solvent-free melt polycondensation of a mixture comprising an FDCA ester with a diamine in excess and a catalyst at a temperature of 60 to 250°C. The melt polycondensation reaction produces a furan-based polyamide having a weight average molecular weight ranging from 7,600 to 20,090. After purification, the furan-based polyamide may be subjected to a solid-state polymerization at a temperature of 140°C to 250°C to increase its molecular weight. This process also entails a long reaction time, notably for the solid-state polymerization step and the polymer thus produced has a large molecular weight distribution.

None of these processes thus allows the efficient industrial manufacture of good quality furan-based polyamides with a high molecular weight and a narrow molecular weight distribution.

### [Summary of the invention]

The invention thus has the aim to propose a process for the manufacture of a furan-based polyamide which allows the efficient industrial preparation of a furan-based polyamide of good quality, i.e. notably with a high molecular weight and a narrow molecular weight distribution.

Indeed, it has unexpectedly been found that if a diamine end-capped oligomer is prepared as the prepolymer using the diamine component in an excess of 1,25 or more with respect to the diacid component, the quality of the furan-based polymer obtained by subsequent polycondensation with a diacid may be substantially improved. It is at present supposed that this improvement is due to the substantial reduction of secondary reactions affecting the reactivity of the diamine end-capped oligomer in the subsequent polymerization step.

Accordingly, a first aspect of the present invention is a process for the manufacture of a furan-based polyamide comprising the steps of:

(a) mixing a diamine component A comprising at least one diamine with a diacid component B comprising at least one diester of 2,5-furandicarboxylic acid to form a reaction mixture ;
(b) heating the reaction mixture obtained in step (a) to a temperature sufficient to form a diamine end-capped oligomer by melt polycondensation; and
(c) polymerizing the diamine end-capped oligomer obtained in step (b) with at least one dicarboxylic acid and optionally further monomers to form a furan-based polyamide, characterized in that

the molar ratio between the diamine component A and the diacid component B in the reaction mixture prepared in step (a) is 1,25 or more.

The diester of 2,5-furandicarboxylic acid is preferably chosen in the group consisting of 2,5-furandicarboxylic acid dimethyl ester, 2,5-furandicarboxylic acid diethyl ester, 2,5-furandicarboxylic acid dipropyl ester and 2,5-furandicarboxylic acid dibutyl ester.

The diamine component A preferably comprises one or more aliphatic diamines, preferably chosen in the group consisting of 1,3-diaminobutane, 1,4-diamino-butane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 2-methyl-1,5-diaminopentane, hexamethylenediamine, 3-methyl-hexamethylenediamine, 1,6-diamino-2,5-dimethylhexane, 1,6-diamino-2,4-dimethylhexane, 1,6-diamino-3,3-dimethylhexane, 1,6-diamino-2,2-dimethylhexane, 1,7-diaminoheptane, 1,8-diaminooctane, 2,2,4-trimethyl-hexamethylenediamine, 2,4,4-trimethyl-hexamethylene-diamine, 2-ethyl-1,7-diaminoheptane, 2-methyl-1,8-diaminooctane, 1,9-diaminononane, 2-methyl-1,8-diaminooctane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 5-methyl-1,9-diaminononane, 1,8-diamino-1,3-dimethyloctane, 1,8-diamino-2,4-dimethyloctane, 1,8-diamino-3, 4- dimethyloctane, 1,8-diamino-4,5-dimethyloctane, 1,8-diamino-1,4-dimethyloctane, 1,8-diamino-2, 2-dimethyloctane, 1,8-diamino-3,3-dimethyloctane, 1,8-diamino-4,4- dimethyloctane, 1,6-diamino-2,4-diethylhexane, 1,1,9-diamino-5-methylnonane, 11-diaminoundecane, 1,12-diaminododecane, and 2,2,7,7-tetramethyl-octanediamine ; or one or more cycloaliphatic diamines, preferably chosen in the group consisting of isophorone diamine, 1,3-diaminocyclohexane, 1, 4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P"). Preferably the diamine component A comprises one or more diamines chosen in the group consisting of straight aliphatic diamines comprising 4 to 18, preferably 6 to 14 carbon atoms.

The molar ratio between the diamine component A and the diacid component B in the reaction mixture is preferably 1,3 or more, in particular from 1,35 to 2,0, and even more preferably from 1,4 to 2,0.

Step (b) may be in particular carried out at a temperature of between 60 and 200°C. The alcohol formed in step (b) formed is preferably removed using a $N_2$ stream or a vacuum. The reaction time of step (b) is advantageously from 1 to 5 hours, preferably from 1.5 to 3 hours. Preferably, no catalyst is used in step (b).

Step (c) may preferably be carried out at a temperature of between 200 and 280°C. This step (c) may be carried out in the presence of one or more further monomers, which may be chosen in the group consisting of an aminocarboxylic acid, a lactam, a mixture of diamines and dicarboxylic acids and their mixtures.

The furan-based polyamide obtained after step (c) preferably has a molecular weight Mw of 50,000 to 150,000 g/mol and/or a molecular weight distribution index (Mw/Mn) of no more than 3,2, preferably no more than 3,0, and more preferably no more than 2,8.

## [Description of embodiments of the invention]

### Definitions

Within the present application, the term **"furan-based polyamide"** is intended to mean a polymer comprising at least one repeat unit formed by the reaction of furandicarboxylic acid, in particular 2,5-furandicarboxylic acid, or one of its derivatives, notably ester, with a diamine.

When based on 2,5-furandicarboxylic acid, a furan-based polyamide comprises at least one and up to 100 mol % of repeat units of the following formula (I) :

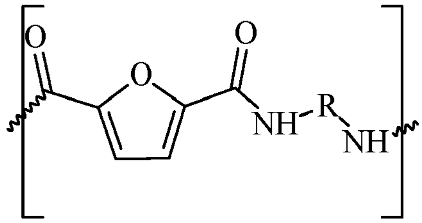

(I)

wherein R is a divalent group selected from optionally substituted hydrocarbyl groups such as straight, branched or cyclic alkylene, aromatic and alkylaromatic groups.

Preferred furan-based polymers comprise at least 50 mol %, preferably at least 60 mol %, in particular at least 70 mol %, more preferred at least 80 mol %, still more preferred at least 90 mol % and especially 100 mol % of repeat units of formula (I) above.

Within the present application, the term **"diamine end-capped oligomer"** is intended to mean a compound comprising at least one amide (-CONH-) function derived from furandicarboxylic acid, in particular 2,5-furandicarboxylic acid, and further comprising at least two terminal amine groups and having an number average molecular weight (Mn) of 300 to 2000 g/mol.

Preferably, said diamine end-capped oligomer comprises at least 50 mol-%, in particular 75 mol-%, in particular 90 mol-% and especially 95 or even 100 mol-% polyamide moieties derived from furandicarboxylic acid.

When based on 2,5-furandicarboxylic acid, the diamine end-capped oligomer may in particular be of the following formula (II):

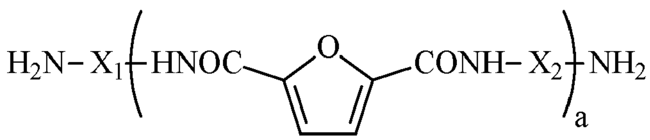

(II)

wherein :

- $X_1$ and $X_2$ designate independently of each other a straight, branched or cyclical, substituted or unsubstituted alkylene group comprising 4 to 18 carbon atoms, notably a straight alkylene of the formula $-(CH_2)_m-$ with m being an integer of 4 to 18, preferably 6 to 16, especially 8 to 14, and in particular 10 to 12, $X_1$ being preferably equal to $X_2$; and
- a is an integer which has a value of 1 to 20, preferably 1 to 10 and most preferably 1 to 5.

The oligomer will typically be formed as a mixture of compounds of formula (II) of different chain length. The oligomer is thus better described using an average value of a, which can vary for instance from 1 to 5, in particular from 1 to 3.

Within the present application, the term **"furandicarboxylic acid"** is intended to mean a diacid formed by a furan cycle carrying two carboxylic acid groups. Among the different isomers of furandicarboxylic acid, 2,5-furandicarboxylic acid (FDCA) is preferred, as it is easily accessible from renewable sources. As mentioned above, the invention concerns a process for the manufacture of a furan-based polyamide comprising the steps of :

(a) mixing a diamine component A comprising at least one diamine with a diacid component B comprising at least one diester of furandicarboxylic acid to form a reaction mixture;
(b) heating the reaction mixture obtained in step (a) to a temperature sufficient to form a diamine end-capped oligomer by melt polycondensation; and
(c) polymerizing the diamine end-capped oligomer obtained in step (b) with at least one dicarboxylic acid and optionally further monomers to form a furan-based polyamide, characterized in that

the molar ratio between the diamine component A and the diacid component B in the reaction mixture prepared in step (a) is 1,25 or more.

<u>Diamine component A</u>

The diamine component A comprises at least one diamine. It is preferred that the diamines have at least one and preferably both amine groups that are primary amine groups.

Particularly preferred diamines include aliphatic diamines, in particular straight or branched diamines with 4 to 18, preferably 6 to 16, especially 8 to 14, and in particular 10 to 12 carbon atoms. Straight aliphatic diamines with 4 to 18, preferably 6 to 14 carbon atoms are particularly preferred. Preferably, the aliphatic diamine may be chosen in the group consisting of 1,3-diaminobutane, 1,4-diamino-butane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 2-methyl-1,5-diaminopentane, hexamethylenediamine, 3-methyl-hexamethylenediamine, 1,6-diamino-2,5-dimethylhexane, 1,6-diamino-2,4-dimethylhexane, 1,6-diamino-3,3-dimethylhexane, 1,6-diamino-2,2-dimethylhexane, 1,7-diaminoheptane, 1,8-diaminooctane, 2,2,4-trimethyl-hexamethylenediamine, 2,4,4-trimethyl-hexamethylene-diamine, 2-ethyl-1,7-diaminoheptane, 2-methyl-1,8-diaminooctane, 1,9-diaminononane, 2-methyl-1,8-diaminooctane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 5-methyl-1,9-diaminononane, 1,8-diamino-1,3-dimethyloctane, 1,8-diamino-2,4-dimethyloctane, 1,8-diamino-3, 4-dimethyloctane, 1,8-diamino-4,5-dimethyloctane, 1,8-diamino-1,4-dimethyloctane, 1,8-diamino-2, 2-dimethyloctane, 1,8-diamino-3,3-dimethyloctane, 1,8-diamino-4,4- dimethyloctane, 1,6-diamino-2,4-diethylhexane, 1,1,9-diamino-5-methylnonane, 11-diaminoundecane, 1,12-diaminododecane, and 2,2,7,7-tetramethyl-octanediamine.

Other preferred diamines include cycloaliphatic diamines, in particular such diamines with 4 to 18, preferably 6 to 16, especially 8 to 14, in particular 10 to 12 carbon atoms. Particularly preferred cycloaliphatic diamines comprise a cyclohexane moiety.

Preferably, such cycloaliphatic diamines may be chosen in the group consisting of isophorone diamine, 1,3-diaminocyclohexane, 1, 4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P").

Other preferred diamines include aromatic diamines, such diamines with 4 to 18, preferably 6 to 16, especially 8 to 14, in particular 10 to 12 carbon atoms. Particularly preferred aromatic diamines comprise one or more phenyl or xylene moieties. In aromatic diamines comprising several aromatic rings, these rings may be connected notably via an alkylene group or an ether group.

Particularly preferred are aromatic diamines chosen in the group consisting of m-xylylene diamine (MXDA) and p-xylylene diamine (PXMA).

The diamine component A may comprise one or more diamines such as those mentioned above. Preferably, the diamine component A consists of one or two diamines among those mentioned above.

<u>Diacid component B</u>

The diacid component B comprises at least one diester of furandicarboxylic acid, in particular 2,5-furandicarboxylic acid.

Preferred such diesters include esters of aliphatic alcohols with 1 to 6, preferably 2 to 4 carbon atoms. Preferred alcohols have a boiling point of at most 160°C so as to allow easy recovery. Preferred such alcohols include methanol, ethanol, propan-1-ol, propan-2-ol, butan-1-ol, butan-2-ol, 2-methylpropan-1-ol, 2-methylpropan-2-ol, pentan-1-ol, pentan-2-ol, pentan-3-ol, 3-methylbutan-1-ol, 2-methylbutan-1-ol, 2,2-dimethylpropan-1-ol, 3-methylbutan-2-ol, 2-methylbutan-2-ol, hexan-1-ol, hexan-2-ol, hexan-3-ol, 2-methylpentan-1-ol, 3-methylpentan-1-ol, 4-methylpentan-1-ol, 2-methylpentan-2-ol, 3-methylpentan-2-ol, 4-methylpentan-2-ol, 2-methylpentan-3-ol, 3-methylpentan-3-ol, 2,2-dimethylbutan-1-ol, 2,3-dimethylbutan-1-ol, 3,3-dimethylbutan-1-ol, 2,3-dimethylbutan-2-ol, 3,3-dimethylbutan-2-ol, 2-ethylbutan-1-ol. Straight alcohols such as methanol, ethanol, propan-1-ol and butan-1-ol are particularly preferred.

While diester with different ester groups are not excluded, preferred diesters carry two identical ester groups.

In particular, the diester of 2,5-furandicarboxylic acid may be chosen in the group consisting of 2,5-furandicarboxylic acid dimethyl ester, 2,5-furandicarboxylic acid diethyl ester, 2,5-furandicarboxylic acid dipropyl ester and 2,5-furandicarboxylic acid dibutyl ester.

The diacid component B may comprise one or more diesters such as those mentioned above. Preferably, the diacid component B consists of one or two diesters mentioned above.

According to an embodiment, the diacid component B comprises 1 to 99 mol%, especially 10 to 90 mol%, in particular 20 to 80 mol% of diester of furandicarboxylic acid, in particular 2,5-furandicarboxylic acid. The rest may be made up by the corresponding monoester or dicarboxylic acid, and/or other dicarboxylic acids or derivatives thereof.

Preferably, the diacid component B essentially consists of one or more diesters of furandicarboxylic acid, in particular 2,3-furandicarboxylic acid.

Step (a) of the process of the invention

In step (a) of the process of the invention, the diamine component A and diacid component B are mixed to form a reaction mixture.

According to the invention, the molar ratio of diamine component A to diacid component B in the reaction mixture is 1,25 or more. Preferably, the molar ratio is 1,3 or more, and even more preferably from 1,35 to 2,5 or from 1,4 to 2,0 or from 1,5 to 1,9.

Preferably however, the reaction mixture essentially consists of the diamine component A and diacid component B.

Step (b) of the process of the invention

In step (b) of the process of the invention, the reaction mixture obtained in step (a) described above is heated to a temperature sufficient to form a diamine end-capped oligomer by melt polycondensation. In view to start or accelerate the reaction, one or more catalysts or other processing aids may be added if appropriate. Advantageously however, no catalyst is added.

Preferably, no solvent is used in step (b).

The appropriate temperature for step (b) depends on the nature of the reactants. Generally however, a temperature of between 60 and 200°C, preferably 80 to 180°C, in particular 100 to 160°C is suitable. It is preferred to conduct the reaction in step (b) under a pressure of 1 atm absolute pressure or less. Preferably, the reaction mixture is stirred during the polycondensation reaction in step (b). Preferably, the step (b) is conducted under an inert atmosphere, for instance under a nitrogen flow. It is further advantageous to remove the alcohol formed from the reaction mixture as the reaction proceeds, for instance using the nitrogen flow or by applying a vacuum.

The reaction time of the polycondensation reaction in step (b) to form the diamine end-capped oligomer is rather short. Generally, a reaction time of 1 to 5 hours, preferably from 1.5 to 3 hours is sufficient.

The diamine end-capped prepolymer can then be isolated from the reaction mixture, and optionally be purified. Advantageously however, no purification is required, so that the process may be conducted without a purification step.

The diamine end-capped oligomer obtained after step (b) of the process has preferably a molecular weight of from 500 to 4000 g/mol, or from 600 to 3000 g/mol, or from 700 to 2500 g/mol, or from 800 to 2000 g/mol, or from 900 to 1500 g/mol.

Some side reactions may occur during the polycondensation reaction. In particular, the diamine may undergo one or more N-methylation reactions. N-methylation of the amine groups yield secondary or tertiary amine groups that are less or even not reactive at all. Also, one or both ester groups of the 2,5-furandicarboxylic diester may be hydrolyzed. The hydrolysis yields 2,5-durandicarboxylic acid that is easily decarboxylated. Such side reactions yield a diamine end-capped oligomer that will yield a polymer with a substantially reduced molecular weight and a broad molecular weight distribution and thus a high polydispersity index (DPI).

However, it has been observed that if the oligomer is produced using a molar ratio between the diamine component A and the diacid component B of 1,25 or more in the reaction mixture, secondary reactions such as those explained above are substantially reduced. Accordingly, the diamine end-capped oligomer obtained in step (b) of the process of the invention can be used to prepare a furan-based polyamide with a large molecular weight and a low polydispersity index.

Step (c) of the process of the invention

In step (c) of the process of the invention, the diamine end-capped oligomer obtained in step (b) described above is polymerized with a dicarboxylic acid to form a furan-based polyamide. Preferably, step (c) is carried out as a melt polycondensation.

In view to start or accelerate the reaction, one or more catalysts or other processing aids may be added if appropriate. Advantageously, a catalyst is added. Catalysts for polyamide polymerization are known. A suitable catalyst is for example phosphinic acid.

Preferably, the dicarboxylic acid is an aliphatic dicarboxylic acid, in particular chosen from the group consisting of oxalic acid, malonic acid, adipic acid, succinic acid, glutaric acid, 2,2-dimethyl-glutaric acid, 2,4,4-trimethyladipic acid, pimelic acid, suberic acid, azelaic acid, sebacic acid, undecanedioic acid, dodecanedioic acid, tetradecanedioic acid, cyclohexane-1,4-dicarboxylic acid, cyclohexane-1,3-dicarboxylic acid. Among these, straight aliphatic dicarboxylic acids and in particular sebacic acid and dodecanedioic acid are particularly preferred.

The dicarboxylic acid may also be an aromatic dicarboxylic acid, in particular chosen from the group consisting of isophtalic acid, terephtalic acid and orthophtalic acid.

Preferably, the reaction is conducted in presence of water.

The appropriate temperature for step (c) depends on the nature of the reactants. Generally however, step (c) may be carried out at a temperature of between 200 and 280°C, preferably 210 to 260°C, in particular 220 to 240°C. Advantageously, the reaction is carried out for a first period at a temperature of 200 to 220°C and then for a second period at a temperature of 240 to 260°C.

Preferably, the reaction mixture is stirred during the polycondensation reaction in step (c).

It is preferred to conduct the reaction in step (c) under a pressure of 1 atm absolute pressure or less. Preferably, the step (c) is conducted under an inert atmosphere, for instance under a nitrogen flow. It is further advantageous to remove the water formed from the reaction mixture as the reaction proceeds, for instance using the nitrogen flow or by applying a vacuum.

Preferably, the reaction time for step (c) is rather short. Generally, a reaction time of 1 to 5 hours, preferably from 1.5 to 3 hours is sufficient.

According to an embodiment, step (c) is carried out in the presence of one or more further monomers. The one or more further monomers may in particular be chosen in the group consisting of aminocarboxylic acids, lactams, mixtures of diamines and dicarboxylic acids and their mixtures. Among these monomers, 11-amino-undecanoic acid is particularly preferred.

The furan-based polyamide obtained after step (c) of the process has preferably a molecular weight Mw of 50,000 to 150,000 g/mol, and preferably 70,000 to 130,000 g/mol.

The furan-based polyamide obtained after step (c) of the process has preferably molecular weight distribution index (Mw/Mn) of no more than 3,2, preferably no more than 3,0, and more preferably no more than 2,8.

The invention will be described in more detail by way of the following non-limiting examples.

**[EXAMPLES]**

Unless specified otherwise, all experiments were carried out under normal conditions, i.e., room temperature (25°C) and ambient pressure (1 atm).

Unless indicated otherwise, all percentages mentioned refer to percent by weight with respect to the weight of the final composition.

**Materials used**

DA10 (decanediamine) : purity > 98% (from Arkema (Suzhou) Polyamide Co., Ltd).
DC10 (decanedicarboxylic acid) : purity > 98%; (Hebei Casda Biomaterial Co., Ltd.)
DMFDCA (2,5-furandicarboxylic acid dimethylester): Purity> 98.5%, (Hefei Leaf Biotech Co., Ltd.
A11 (11-aminoundecanoic acid) : Purity 97% (Sigma Aldrich)
Phosphinic acid: 50 wt.% solution (Sinopharm chemical reagent Co., Ltd).

**Test methods**

**1. Potentiometric titration**

The alkalinity and acidity of the diamine end-capped oligomer was determined by potentiometric titration using a Metrohm 905 potentiometric titrator.

For acid group titration, the diamine end-capped oligomer was dissolved in 2-tert-butylphenol and titration was performed using a 0.02 mol/L of tetrabutyl ammonium solution.

For amine group titration, the diamine end-capped oligomer was dissolved in m-cresol and titration was performed using a 0.02mol/L of perchloric acid solution.

The acid group content [COOH] (mmol/Kg) thus determined can be used to calculate the hydrolysis rate of ester groups of DMFDCA, given in %, by formula (I) below:

$$Ester\ Hydrolysis\ Rate = \frac{(X \cdot M_{DA10} + M_{DMFDCA} - 2 \cdot M_{CH3OH})}{1000} \cdot \frac{A}{2000} \cdot 100\ \% \qquad (I)$$

wherein:

X represents the number of moles of diamine divided by the number of moles of DMFDCA used in the process (molar ratio);

$M_{DMFDCA}$ represents the molecular weight of DMFDCA (184,1 g/mol);
$M_{DA10}$ represents the molecular weight of the decanediamine (172,3 g/mol);
$M_{CH3OH}$ represents the molecular weight of methanol (32 g/mol); and
A represents the acid group content.

## 2. NMR

Proton nuclear magnetic resonance spectroscopy ($^1$H-NMR) was used to determine the side reactions, notably N- methylation of the amino group. The spectra were recorded on a 500 MHz NMR instrument (Avance III HD from Bruker) in deuterated trifluoroacetic acid (TFA-d). The peak at 7,42 ppm was set to 2H, and the peaks at 2,98 and 3,07 ppm, respectively, set to the N-methylation.

The N-methylation (molar ratio) was calculated by the Formula (III) below:

$$N - methylation\,(\%) = \frac{(\text{peak area at 2,98 ppm+peak area at 3,07 ppm})}{3} \cdot 100 \qquad \text{(III)}$$

## 3. Size Exclusion Chromatography (SEC)

The weight average molecular weight (Mw) and number average molecular weight (Mn) were determined by size exclusion chromatography (using a system e2695 Alliance from Waters). The polymers were dissolved in hexafluoroisopropanol (HFIP) and HFIP containing 0.05 M sodium trifluoroacetate was used as mobile phase. The conditions used are summarized below:

Carrier phase: HFIP
Detector: RI 2414
Column: PPS PFG analytical 100 Å + PPS PFG analytical 1000 Å
Standard: PMMA calibration kit M-M-10, PL2020-0101
Flow rate: 1 mL/min
Injected volume: 100 μL
Analysis time: 30 min

The polydispersity index (PDI) was calculated by dividing the weight average molecular weight (Mw) by the number average molecular weight (Mn).

## 4. Inherent Viscosity (IV)

The inherent viscosity (IV) of the polymers obtained was determined as indicated in ISO 307:2007 using an Ubbelohde viscosimeter, modified in that meta-cresol was used as a solvent instead of sulfuric acid, the concentration was 0,5 wt.% and the temperature was 20°C.

## 5. Thermal Analysis

The melting temperature (Tm)and glass transition temperature (Tg) of the polymers obtained were measured by differential scanning calorimetry (DSC) following ISO 11357:2023, except that the samples were heated under $N_2$ atmosphere with a first heating from room temperature to 260°C at a heating rate of 20°C/min, followed by cooling to 0°C at a cooling rate of 20°C/min, and a second heating from 0 to 260°C at a heating rate of 20°C/min. The melting temperature and the glass transition temperatures were recorded during the second heating cycle.

## EXAMPLE A1

### Synthesis of diamine end-capped oligomer A1

A diamine end-capped oligomer A1 was synthesized as follows.

Into a glass tube were introduced 109,747 g (637,271 mmol) of decanediamine (DA10) and 90,253 g (489,840 mmol) of 2,5-furandicarboxylic acid dimethylester (DMFDCA). The molar ratio between the diamine and the diacid dimethylester is 1,3. The glass tube with the raw materials was then placed into an 1L autoclave equipped with an agitator.

After removing the air in the autoclave by flushing three times with gaseous nitrogen, the autoclave was heated to

T= 120°C within 20 min while keeping the reactants under inert atmosphere at atmospheric pressure. Once the temperature reached 120°C, the mixture in the autoclave was stirred and a continuous nitrogen flow (150 ml/min) was introduced to remove the methanol formed from the reaction mixture. After holding the temperature at T=120°C for one hour, the nitrogen flowrate was increased to 200 ml/min, and the autoclave was heated to T=160 °C within one hour, and this temperature was hold for 20 mins before cooling to room temperature.

The diamine end-capped oligomer obtained was extracted from the glass tube in the autoclave as a yellowish solid and is reduced to a powder with a hammer before further use.

The diamine end-capped oligomer A1 thus obtained was characterized by potentiometric titration and $^1$H-NMR. The diamine end-capped oligomer was found to have 1696 mmol/kg of amine endgroups [NH2], and 23mmol/kg of carboxylic endgroups [COOH]. The hydrolysis rate of the 2,5-furandicarboxylic acid dimethylester, calculated from the carboxylic terminal groups [COOH] content, was found to be 0,39%. The $^1$H-NMR spectrum showed that the diamine end-capped oligomer obtained contained approximately 2 mol.-% of N-methylated compounds. The results are summarized in Table 1 below.

## EXAMPLE A2

### Synthesis of diamine end-capped oligomer A2

A diamine end-capped oligomer A2 was synthesized from DA10 and DMFDCA using the procedure described in Example A1 above, except that the monomer feed mole ratio was changed as indicated in Table 1.

Into a glass tube were introduced 168,809 g (979,680 mmol) of decanediamine (DA10) and 90,253 g (489.840 mmol) of 2,5-furandicarboxylic acid dimethylester (DMFDCA). The molar ratio between the diacid dimethylester and the diamine is 2,0. The glass tube with the raw materials was then placed into an 1L autoclave equipped with an agitator and the reaction was conducted as described in Example A1 above.

The diamine end-capped oligomer A2 obtained was characterized in terms of [$NH_2$] content and [COOH] content by potentiometric titration and $^1$H-NMR as described in Example A1 above. The results are summarized in Table 1 below.

According to the results shown in Table 1, the side reactions (e.g, N-methylation and hydrolysis) decrease with an increasing mole ratio between diamine and diester. The side reactions are undesired as they inhibit the subsequent polycondensation of the diamine end-capped oligomer with a diacid. Further, the examples show that diamine end-capped oligomers prepared using a large molar excess of diamine component A have a higher concentration of amine end groups and a lower concentration of carboxylic acid end groups.

However, the inventors surprisingly found that the N-methylation and ester hydrolysis can be greatly suppressed by increasing the mole ratio between the diamine and the FDCA-based monomer.

**Table 1:** Characterization of the diamine end-capped oligomers

| | Diamine end-capped oligomer A1 | Diamine end-capped oligomer A2 | Diamine end-capped oligomer A3 |
|---|---|---|---|
| Mole ratio between DA10 and DMFDCA | 1,3 | 2,0 | 1,2 |
| Molecular Weight (g/mol) | 1253 | 496.5 | 1716.1 |
| [NH2], (mmol/Kg) | 1696 | 4088 | 1535 |
| [COOH], (mmol/Kg) | 23 | 10 | 70 |
| N-methylation (mol.-%) | 2 | 1 | 3.7 |
| Hydrolysis (%) | 0,39 | 0,2 | 1,14 |

## COMPARATIVE EXAMPLE A3

### Synthesis of diamine end-capped oligomer A3

A diamine end-capped oligomer A3 was synthesized from DA10 and DMFDCA using the procedure described in Example A1 above, except that the monomer feed mole ratio was changed as indicated in Table 1.

Into a glass tube were introduced 101,285 g (587,808 mmol) of decanediamine (DA10) and 90,253 g (489,840 mmol) of 2,5-furandicarboxylic acid dimethylester (DMFDCA). The molar ratio between the diacid dimethylester and the diamine is 1,2. The glass tube with the raw materials was then placed into an 1L autoclave equipped with an agitator and the reaction was conducted as described in Example A1 above.

The diamine end-capped oligomer A3 obtained was characterized in terms of [$NH_2$] content and [COOH] content by potentiometric titration and $^1$H-NMR as described in Example A1 above. The results are summarized in Table 1 above.

**EXAMPLE B1**

**Synthesis of Polyamide B1**

An FDCA-based polyamide was produced from the diamine end-capped oligomer A1 as follows.
Into a 600 mL glass tube were introduced 42,918 g of diamine end-capped oligomer A1, 7,082 g of decanedicarboxylic acid (DC10), 10 g of water and 0,02 g of phosphinic acid ($H_3PO_2$) (the respective loading is summarized in table 2 below). The glass tube was capped with three-necked lid, fitted with a mechanical agitator, and a nitrogen in and outflow.
After removing the air by flushing three times with nitrogen, the tube was heated under stirring to T= 200 °C within 30 min. Then, a nitrogen flow (150 ml/min) was passed through the tube to continuously remove from the reaction mixture the water vapor formed. After holding the temperature at T=200 °C for 30 min, the tube was heated to T=240 °C within 10 min, and this temperature was maintained for 45 min before cooling to room temperature.
The polymer thus obtained was characterized by its melting temperature Tm, glass transition temperature Tg, the inherent viscosity, polydispersity index (PDI) and its molecular weight. The results are summarized in table 2 below.

**EXAMPLE B2**

**Synthesis of Polyamide B2**

An FDCA based polyamide was produced from the diamine end-capped oligomer A1 as follows.
Into a 600 mL glass tube were introduced 37,988g of diamine end-capped oligomer A1 obtained according to example A1 above, 6,417 g of decanedicarboxylic acid (DC10), 5,595 g of 11-aminoundecanoic acid (A11), 10 g of water and 0,02 g of phosphinic acid ($H_3PO_2$) (the respective loading is indicated in table 2 below).
After removing the air by flushing three times with nitrogen, the tube was heated under stirring to T= 200 °C within 30 min. Then, a nitrogen flow (150 ml/min) was passed through the tube to continuously remove from the reaction mixture the water formed. After holding the temperature at T=200 °C for 30 min, the tube was heated to T=240 °C within 10 min, and this temperature was maintained for 45 min before cooling to room temperature.
The polymer thus obtained was characterized by its melting temperature Tm, glass transition temperature Tg, the inherent viscosity, polydispersity index (PDI) and its molecular weight. The results are summarized in table 2 below.

**EXAMPLE B3**

**Synthesis of Polyamide B3**

An FDCA based polyamide was produced from the diamine end-capped oligomer from example A1 as follows.
Into a 600 mL glass tube were introduced 34,165 g of diamine end-capped oligomer obtained according to example A1 above, 5,771 g of decanedicarboxylic acid (DC10), 10,064 g of 11-aminoundecanecarboxylic acid (A11), 10 g of water and 0,02 g of phosphinic acid ($H_3PO_2$) (the respective loading is indicated in table 2 below).
After removing the air by flushing three times with nitrogen, the tube was heated under stirring to T= 200 °C within 30 min. Then, a nitrogen flow (150 ml/min) was passed through the tube to continuously remove from the reaction mixture the water formed. After holding the temperature at T=200 °C for 30 min, the tube was heated to T=240 °C within 10 min, and this temperature was maintained for 45 min before cooling to room temperature.
The polymer thus obtained was characterized by its melting temperature Tm, glass transition temperature Tg, the inherent viscosity, polydispersity index (PDI) and its molecular weight. The results are summarized in table 2 below.

**EXAMPLE B4**

**Synthesis of Polyamide B4**

An FDCA based polyamide was produced from the diamine end-capped oligomer from example A1 as follows.
Into a 600 mL glass tube were introduced 28,44 g of diamine end-capped oligomer obtained according to example A1 above, 4,804 g of decanedicarboxylic acid (DC10), 16,759 g of 11-aminoundecanoic acid (A11), 10 g of water and 0,02 g of phosphinic acid ($H_3PO_2$) (the respective loading is indicated in table 2 below).
After removing the air by flushing three times with nitrogen, the tube was heated under stirring to T= 200 °C within

30 min. Then, a nitrogen flow (150 ml/min) was passed through the tube to continuously remove from the reaction mixture the water formed. After holding the temperature at T=200 °C for 30 min, the tube was heated to T=240 °C within 10 min, and this temperature was maintained for 45 min before cooling to room temperature.

The polymer thus obtained was characterized by its melting temperature Tm, glass transition temperature Tg, the inherent viscosity, polydispersity index (PDI) and its molecular weight. The results are summarized in table 2 below.

**Table 2 : Reactants used for the synthesis of the copolyamides**

| Raw Materials | Example B1 | Example B2 | Example B3 | Example B4 |
|---|---|---|---|---|
| Diamine end-capped oligomer A1 (g) | 42,918 | 37,988 | 34,165 | 28,44 |
| Decanedicaboxylic acid (DC10) (g) | 7,082 | 6,417 | 5,771 | 4,804 |
| 11-aminoundecanoic acid (A11) (g) | 0 | 5,595 | 10,064 | 16,759 |
| water (g) | 10 | 10 | 10 | 10 |
| Phosphinic acid ($H_3PO_2$) (g) | 0,02 | 0,02 | 0,02 | 0,02 |
| IV (dL/g) | 1,2 | 1,1 | 1,2 | 1,4 |
| Mw (g/mol) | 65,138 | 58,596 | 70,342 | 92,769 |
| PDI | 2,27 | 2,22 | 2,29 | 2,49 |
| Tm (°C) | none | none | none | none |
| Tg (°C) | 86 | 74 | 68 | 59 |

According to the results shown in Table 2, the diamine end-capped oligomer A1 reacts with diacid monomers (e.g., DC10 and/or A11) through melt polycondensation to produce copolyamides of high molecular weight (greater than 50,000 g/mol) and narrow molecular weight distribution (less than 2.5 PDI).

In contrast, the diamine end-capped oligomer A3 prepared as a comparative example contains more unreactive end groups and can thus not form a polymer with a high molecular weight.

Accordingly, the process as described above allows for the efficient manufacture of a furan-based polyamide with a high molecular weight and a narrow molecular weight distribution.

**[List of cited documents]**

[WO 2014205358A1]
[CN 111471297A]
[WO 2015/059047A1]
[US 2018/0371167 A1]

**Claims**

**1.** Process for the manufacture of a furan-based polyamide comprising the steps of:

(a) mixing a diamine component A comprising at least one diamine with a diacid component B comprising at least one diester of 2,5-furandicarboxylic acid to form a reaction mixture;
(b) heating the reaction mixture obtained in step (a) to a temperature sufficient to form a diamine end-capped oligomer by melt polycondensation; and
(c) polymerizing the diamine end-capped oligomer obtained in step (b) with at least one dicarboxylic acid and optionally further monomers to form a furan-based polyamide,

**characterized in that**
the molar ratio between the diamine component A and the diacid component B in the reaction mixture prepared in step (a) is 1,25 or more.

**2.** Process for the manufacture according to claim 1, wherein the diester of 2,5- furandicarboxylic acid is chosen in the

group consisting of 2,5-furandicarboxylic acid dimethyl ester, 2,5-furandicarboxylic acid diethyl ester, 2,5-furandicarboxylic acid dipropyl ester and 2,5-furandicarboxylic acid dibutyl ester.

**3.** Process for the manufacture according to claim 1 or 2, wherein the diamine component A comprises one or more aliphatic diamines, preferably chosen in the group consisting of 1,3-diaminobutane, 1,4-diamino-butane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 2-methyl-1,5-diaminopentane, hexamethylenediamine, 3-methyl-hexamethylenediamine, 1,6-diamino-2,5-dimethylhexane, 1,6-diamino-2,4-dimethylhexane, 1,6-diamino-3,3-dimethylhexane, 1,6-diamino-2,2-dimethylhexane, 1,7-diaminoheptane, 1,8-diaminooctane, 2,2,4-trimethyl-hexamethylenediamine, 2,4,4-trimethyl-hexamethylenediamine, 2-ethyl-1,7-diaminoheptane, 2-methyl-1,8-diaminooctane, 1,9-diaminononane, 2-methyl-1,8-diaminooctane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 5-methyl-1,9-diaminononane, 1,8-diamino-1,3-dimethyloctane, 1,8-diamino-2,4-dimethyloctane, 1,8-diamino-3,4-dimethyloctane, 1,8-diamino-4,5-dimethyloctane, 1,8-diamino-1,4-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane, 1,1,9-diamino-5-methylnonane, 11-diaminoundecane, 1,12-diaminododecane, and 2,2,7,7-tetramethyl-octanediamine ; or one or more cycloaliphatic diamines, preferably chosen in the group consisting of isophorone diamine, 1,3-diaminocyclohexane, 1, 4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P").

**4.** Process for the manufacture according to any of claims 1 to 3, wherein the diamine component A comprises one or more diamines chosen in the group consisting of straight aliphatic diamines comprising 4 to 18, preferably 6 to 14 carbon atoms.

**5.** Process for the manufacture according to any of claims 1 to 4, wherein the molar ratio between the diamine component A and the diacid component B in the reaction mixture is 1,3 or more, preferably from 1,35 to 2,0, and even more preferably from 1,4 to 2,0.

**6.** Process for the manufacture according to any of claims 1 to 5, wherein step (b) is carried out at a temperature of between 60 and 200°C.

**7.** Process for the manufacture according to any of claims 1 to 6, wherein the alcohol formed in step (b) formed is removed using a $N_2$ stream or a vacuum.

**8.** Process for the manufacture according to any of claims 1 to 7, wherein the reaction time of step (b) is from 1 to 5 hours, preferably from 1.5 to 3 hours.

**9.** Process for the manufacture according to any of claims 1 to 8, wherein no catalyst is used in step (b).

**10.** Process for the manufacture according to claim 9, wherein step (c) is carried out at a temperature of between 200 and 280°C.

**11.** Process for the manufacture according to claim 9 or 10, wherein step (c) is carried out in the presence of one or more further monomers.

**12.** Process for the manufacture according to claim 11, wherein the one or more further monomers are chosen in the group consisting of an aminocarboxylic acid, a lactam, a mixture of diamines and dicarboxylic acids and their mixtures.

**13.** Process for the manufacture according to any of claims 9 to 11, wherein the furan-based polyamide obtained after step (c) has a molecular weight Mw of 50,000 to 150,000 g/mol.

**14.** Process for the manufacture according to any of claims 9 to 11, wherein the furan-based polyamide obtained after step (c) has a molecular weight distribution index (Mw/Mn) of no more than 3,2, preferably no more than 3,0, and more preferably no more than 2,8.

Europäisches Patentamt
European Patent Office
Office européen des brevets

# EUROPEAN SEARCH REPORT

Application Number
EP 24 30 5016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/251479 A1 (SMITH DEEDEE [US] ET AL) 1 September 2016 (2016-09-01)<br>* paragraph [0119] *<br>* example 1a; table 3 *<br>* example 1; table 2 *<br>----- | 1-14 | INV.<br>C08G69/26<br>C08G69/28 |
| A | KR 2016 0118033 A (KOREA INST SCI & TECH [KR]) 11 October 2016 (2016-10-11)<br>* paragraph [0074] - paragraph [0079] *<br>* paragraph [0080] - paragraph [0103] *<br>* paragraph [0052] *<br>----- | 1-14 | |

TECHNICAL FIELDS SEARCHED (IPC)

C08G

The present search report has been drawn up for all claims

1

| Place of search | Date of completion of the search | Examiner |
|---|---|---|
| Munich | 21 May 2024 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 30 5016

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | Publication date | Patent family member(s) | Publication date |
|---|---|---|---|
| US 2016251479 A1 | 01-09-2016 | EP 3060598 A1 | 31-08-2016 |
| | | US 2016251479 A1 | 01-09-2016 |
| | | WO 2015059047 A1 | 30-04-2015 |
| KR 20160118033 A | 11-10-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014205358 A1
- CN 111471297 A
- WO 2015059047 A1
- US 20180371167 A1